(19) Europäisches Patentamt
European Patent Office
Office européen des brevets

(11) EP 1 380 539 B1

(12) EUROPÄISCHE PATENTSCHRIFT

(45) Veröffentlichungstag und Bekanntmachung des Hinweises auf die Patenterteilung:
**25.08.2010 Patentblatt 2010/34**

(51) Int Cl.:
***C01D 15/04*** *(2006.01)* ***H01M 6/14*** *(2006.01)*
***H01M 10/05*** *(2010.01)*

(21) Anmeldenummer: **03014022.2**

(22) Anmeldetag: **23.06.2003**

(54) **Verfahren zur Herstellung von Lithiumiodidlösungen**

Process for manufacturing of Lithium Iodide solutions

Procédé de fabrication de solutions d'iodure de lithium

(84) Benannte Vertragsstaaten:
**AT BE BG CH CY CZ DE DK EE ES FI FR GB GR HU IE IT LI LU MC NL PT RO SE SI SK TR**

(30) Priorität: **24.06.2002 DE 10228201**

(43) Veröffentlichungstag der Anmeldung:
**14.01.2004 Patentblatt 2004/03**

(73) Patentinhaber: **Chemetall GmbH**
**60487 Frankfurt am Main (DE)**

(72) Erfinder:
- **Wietelmann, Ulrich**
  **61381 Friedrichsdorf (DE)**
- **Lischka, Uwe**
  **60437 Frankfurt am Main (DE)**

(74) Vertreter: **Uppena, Franz et al**
**Chemetall GmbH**
**Patente, Marken & Lizenzen**
**Trakehner Strasse 3**
**60487 Frankfurt/Main (DE)**

(56) Entgegenhaltungen:
**WO-A-00/36683 WO-A-02/28500**

- **MODDIE D TAYLOR ET AL: "New Preparations of Anhydrous Iodides of Groups I and I1 Metals" JOURNAL OF THE AMERICAN CHEMICAL SOCIETY, AMERICAN CHEMICAL SOCIETY, WASHINGTON, DC, US, Bd. 77, Nr. 6, 20. März 1955 (1955-03-20), Seiten 1507-1508, XP007902882 ISSN: 0002-7863**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Herstellung von Lithiumiodidlösungen.

Die heutzutage gängigen Lithiumbatterien (sowohl primäre als auch sekundäre Batteriezellen) enthalten normalerweise wasserfreie, flüssige, ionenleitende Elektrolyte, in denen Leitsalze wie $LiPF_6$, $LiClO_4$, Lithiumimide, Lithiumborate oder Lithiumiodid in gelöster Form vorliegen. Als Lösungsmittel werden typischerweise Carbonate (z.B. Ethylencarbonat, Dimethylcarbonat), Carbonsäureester, Lactone und/oder Ether, jeweils einzeln oder als Gemisch, verwendet.

Lithiumiodid kann als Elektrolyt in nichtwässrigen Batterien eingesetzt werden. Aufgrund seiner begrenzten Oxidationsstabilität kann dieses Salz nur für elektrochemische Zellen mit bis zu 2 V Zellenspannung verwendet werden. Gebräuchliche Systeme enthalten z.B. Eisensulfidkathoden und Lithiummetallanoden. Der verwendete Flüssigelektrolyt muss eine genügend hohe Leitfähigkeit (mindestens $10^{-4}$ mS/cm) und Beständigkeit gegenüber den verwendeten Aktivmaterialien aufweisen. In der US 6,218,054 werden für diesen Zweck Lösungen von Lithiumsalzen, z.B. Lithiumiodid, in einem Gemisch aus 1,3-Dioxolan und 1,2-Dimethoxyethan vorgeschlagen.

Solche Flüssigelektrolyte werden normalerweise durch Auflösen von festem, wasserfreiem Lithiumiodid im gewünschten Lösemittelgemisch hergestellt. Nachteilig an diesem Prozess ist, dass es sich dabei um ein Mehrstufenverfahren handelt:

- Herstellung von festem Lithiumiodid
- Nachtrocknung bis zu einem sehr geringen Wasserwert (z.B. < 100 ppm)
- Auflösen im gewünschten Lösemittel(gemisch)
- Nachkonditionierung des Flüssigelektrolyten (Trocknung, Filtration)

Die Kosten eines solchen mehrstufigen Verfahrens sind relativ hoch.

Ein weiterer Nachteil dieses gängigen Verfahrens ist, dass die für den Einsatz in nichtwässrigen Elektrolyten geeigneten Lithiumiodidqualitäten nicht einfach durch Eindampfung wässriger Lithiumiodidlösungen gewonnen werden können. Aus wässriger Lösung kristallisiert nämlich ein Monohydrat, das nicht ohne hydrolytische Zersetzung gemäß:

$$LiI \cdot H_2O \xrightarrow{\Delta T} LiOH + HI\uparrow$$

getrocknet werden kann.

Das bei der Zersetzung entstehende Lithiumhydroxid LiOH ist als Verunreinigung in Lithiumiodid für Batterieelektrolyte nicht akzeptabel, da es nur schwierig abtrennbar ist, aber andererseits in der elektrochemischen Zelle stören würde. Außerdem lösen sich LiOH-verunreinigte Produkte nur langsam und unvollständig in organischen Lösungsmitteln.

Deshalb muss das Lithiumiodid in Abwesenheit von Wasser synthetisiert werden. Ein solches Verfahren besteht in der Umsetzung von Lithiumhydrid mit Iod in Diethylether (M.D.Taylor und L.R. Grant, J. Am. Chem. Soc. 77 (1955) 1507-1508) gemäß:

$$2\ LiH + I_2 \xrightarrow{(H_3C\text{-}CH_2)_2O} 2\ LiI + H_2\uparrow$$

Nachteilig an diesem Verfahren ist, dass aufgrund des sehr niedrigen Siedepunktes von Diethylether (35 °C) und des entsprechend hohen Dampfdruckes aufwändige Vorkehrungen zum sicheren Umgang mit diesem Stoff getroffen werden müssen. Auch ist das bei diesem Verfahren entstehende Wasserstoffgas lösemittelgesättigt, wobei aufgrund der hohen Flüchtigkeit des Diethylethers die Lösungsmittelbelastung im Wasserstoffgas entsprechend hoch ausfällt wird die Umsetzung durch portionsweise Zugabe von Diethylether gestartet. Diese Vorgehensweise ist wegen der hohen Exothermie der Reaktion und der Gasentwicklung nicht gefahrlos in einen größeren (technischen) Maßstab (sogenannte "Batchfahrweise") zu übertragen.

Aufgabe der vorliegenden Erfindung ist es, ein Verfahren zur Herstellung von Lithiumiodid zu schaffen, das die Nachteile des Standes der Technik vermeidet und insbesondere eine ungefährliche, kostengünstige Herstellung von reinen Lithiumiodidelektrolyten erlaubt.

Die Aufgabe wird durch ein Verfahren gelöst, bei dem die Herstellung des Lithiumiodids durch Reaktion eines lithiumhaltigen Stoffes mit elementarem Iod in einem aprotischen Lösungsmittel, welches als Lösungsmittel in einer Flüssigelektrolytmischung eingesetzt werden kann, erfolgt, wobei Lithiummetall oder Lithiumhydrid im aprotischen Lösungsmittel mit elementarem Iod umgesetzt wird, indem das Lithiummetall oder das Lithiumhydrid im Lösungsmittel

vorgelegt und das Iod als Feststoff oder als Lösung zudosiert wird. Auf diese Weise werden direkt verwendungsfähige, wasserfreie, lithiumiodidhaltige Flüssigelektrolytlösungen erhalten.

Als aprotische Lösungsmittel eigenen sich solche Lösungsmittel, die in Lithiumbatterien und gegenüber Lithiummetall oder Lithiumhydrid und gegenüber Iod ausreichend beständig sind. Bevorzugt können cyclische oder offenkettige di- oder mehr-funktionelle Ether, Carbonate (= Kohlensäureester), Carbonsäureester oder Lactone (insbesondere γ-Lactone, wie γ-Butyrolacton), oder Mischungen davon eingesetzt werden.

Zu den bevorzugten Ethern gehören insbesondere Dioxolane und Glykolether (Glymes mit der allgemeinen Formel

$$R^1\text{-O-(-}CH_2CH_2\text{-O-)}_n\text{-}R^2$$

mit $R^1$, $R^2$ = unabhängig voneinander $CH_3$, $C_2H_5$ oder $C_4H_9$,und n = 1 bis 50). Zu den bevorzugten Carbonaten gehören Ethylencarbonat (EC), Propylencarbonat (PC), Butylencarbonat (BC), Vinylencarbonat (VC), Dimethylcarbonat (DMC), Diethylcarbonat (DEC), Dipropylcarbonat (DPC), Ethylmethylcarbonat (EMC), Methylpropylcarbonat (MPC), Butylmethylcarbonat (BMC), Ethylpropylcarbonat (EPC) und Butylethylcarbonat (BEC). Zu den bevorzugten Carbonsäureestern gehören Ethylacetat und Butylacetat. Ganz besonders bevorzugt sind folgende Lösungsmittel:

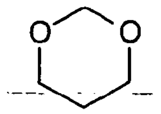

1,3-Dioxolan

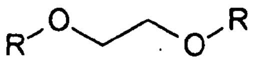

1,2-Dimethoxyethan (R = Me)
1,2-Diethoxyethan (R = Et)

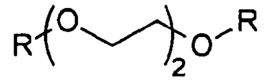

Diethylenglykoldimethylether (R = Me)
Diethylenglykoldiethylether (R = Et)

Als lithiumhaltiger Stoff werden bevorzugt Lithiummetall oder Lithiumhydrid eingesetzt.

Bevorzugt wird das Verfahren so durchgeführt, dass das Lithiummetall oder das Lithiumhydrid im Lösungsmittel vorgelegt wird und das Iod als Feststoff zudosiert wird. So wird vermieden, dass elementares Iod mit dem Lösungsmittel reagieren kann. Es ist aber auch möglich, eine Lösung von Iod im Lösungsmittel zuzudosieren. Prinzipiell ist es auch möglich, das Iod im Lösungsmittel vorzulegen und den Lithiumrohstoff zuzudosieren.

Die Reaktionen gemäß

$$2\ LiH + I_2 \xrightarrow{\text{Lösemittel}} 2\ (LiI)_{SOLV} + H_2\uparrow \qquad (1)$$

$$2\ Li + I_2 \xrightarrow{\text{Lösemittel}} 2\ (LiI)_{SOLV} \qquad (2)$$

sind stark exotherm, wobei die Reaktionsgeschwindigkeit im wesentlichen vom Verteilungsgrad (also der Partikelgrößenverteilung) der Lithiumkomponente abhängt.

Das Lithiummetall oder das Lithiumhydrid kann in grobstückiger bis sehr feiner Form eingesetzt werden. Bevorzugt ist der Einsatz von Pulver mit einer Korngröße von 10 bis 500 μm oder Granulat mit einer Korngröße von 0,5 bis 10 mm. Falls grobstückiges Material eingesetzt wird, dauert die Umsetzung (erkennbar an der Entfärbung der Lösung) manchmal einige Stunden. In diesem Fall besteht eine besonders bevorzugte Variante darin, gegen Reaktionsende eine kleine Menge (z.B. 1 bis 10 % der insgesamt eingesetzten Lithiumrohstoffmenge) pulverförmiges, also sehr reaktives Lithiummetall oder Lithiumhydrid einzusetzen. Dies bewirkt eine wesentliche Verkürzung der Reaktionsendphase.

Für die Verwendungsfähigkeit von Lithiumiodidlösungen in elektrochemischen Applikationen ist ein möglichst niedriger Gehalt an freiem Iod entscheidend. $I_2$ würde nämlich aufgrund seiner Reaktivität Batteriebestandteile angreifen und korrodieren. Aus diesem Grund wird die Lithiumkomponente bevorzugt im Überschuss eingesetzt. Besonders bevorzugt ist ein Überschuss von 1 bis 100 mol-%, ganz besonders bevorzugt von 3 bis 20 mol-%. Ein Überschuss empfiehlt sich auch insbesondere in den Fällen, in denen relativ grobstückige Lithiumrohstoffe, das heißt solche mit kleinen spezifischen Oberflächen, eingesetzt werden. Da die Reaktionsgeschwindigkeit eine Funktion der Oberfläche des unlöslichen Lithiumrohstoffes ist, kann z.B. durch Verdoppelung der Lithiumrohstoffmenge eine proportionale Beschleunigung der Reaktion erreicht werden.

Bevorzugt wird die Ansatzkonzentration so gewählt, dass eine 5 bis 30 Gew.-%ige Lösung von Lithiumiodid

im aprotischen Lösungsmittel erhalten wird.

Mögliche Umsetzungstemperaturen liegen im Bereich, in dem die Lösungsmittel flüssig sind, das heißt bei ca. -20 bis 150 °C. Um jedoch Lösungsmittelverluste durch den Gasstrom gemäß Reaktion (1) und mögliche Nebenreaktionen zwischen Lithium und/oder Iod auf der einen und dem Lösungsmittel auf der anderen Seite zu vermeiden, wird die Reaktion bevorzugt unter Kühlung im Temperaturbereich von -20 bis 100 °C, besonders bevorzugt von 0 bis 60 °C durchgeführt.

Unter den bevorzugten Temperaturbedingungen erfolgt die Zudosierung des Iods innerhalb etwa 10 Minuten bis 5 Stunden. Der Fortschritt der Reaktion kann im Falle der Reaktion (1) bequem über eine Messung der Gasentwicklung erfolgen. Außerdem ist der Endpunkt leicht an einer Entfärbung des Reaktionsgemisches zu erkennen: wenn sich alles Iod umgesetzt hat, verschwindet die braune Farbe des gelösten elementaren Iods. Eine weitere, für beide Reaktionsvarianten (1) und (2) geeignete Form der Reaktionsverfolgung besteht in der Messung der elektrischen Leitfähigkeit der Reaktionslösung. Während anfangs nur eine sehr geringe Leitfähigkeit von < 0,05 mS/cm gemessen wird, steigt diese im Reaktionsverlauf proportional zur LiI-Konzentration.

Bevorzugt wird die Reaktion unter Lichtausschluss durchgeführt. So können unerwünschte, durch Licht induzierte Radikalreaktionen von Iod mit dem Lösungsmittel unterbunden werden.

Wegen der Oxidationsempfindlichkeit von Iodidlösungen (Rückbildung von elementarem Iod) wird die Umsetzung bevorzugt unter Ausschluss von Luft und insbesondere Sauerstoff, also unter Inertgas, durchgeführt. Für den Fall, dass als Lithiumrohstoff Lithiumhydrid verwendet wird, ist beispielsweise Stickstoff geeignet. Wird Lithiummetall als Lithiumrohstoff verwendet, wird ein Edelgas, bevorzugt Argon, eingesetzt.

Nach Abschluss der Reaktion (dies ist z.B. erkenntlich an der Entfärbung der Reaktionsmischung) können der überschüssige Lithiumrohstoff und gegebenenfalls andere, unlösliche Nebenprodukte ohne größeren Aufwand quantitativ durch eine fest/flüssig-Trennoperation, also Filtration, Dekantation oder Zentrifugation entfernt werden.

Die Vorteile des erfindungsgemäßen Verfahrens liegen insbesondere darin, dass die gefährliche Handhabung von Diethylether vermieden wird, die Isolierung des hygroskopischen Lithiumiodidfeststoffes vermieden wird, das Verfahren einstufig ist und zu einer reinen, wasserfreien Lithiumiodidlösung in einem aprotischen, elektrochemisch stabilen Lösungsmittel führt.

Ein weiterer Vorteil des erfindungsgemäßen Verfahrens besteht darin, dass die Lithiumiodidlösungen durch den Lithiumrohstoff extrem gut getrocknet werden. Sowohl Lithium als auch Lithiummetall reagieren nämlich schnell und irreversibel mit Feuchtigkeitsspuren gemäß:

$$Li + H_2O \rightarrow LiOH \downarrow + 1/2\ H_2 \uparrow \qquad (3)$$

$$LiH + H_2O \rightarrow LiOH \downarrow + H_2 \uparrow \qquad (4)$$

Die dabei gebildeten Nebenprodukte beeinträchtigen die Produktqualität nicht, da sie entweder gasförmig entweichen oder völlig unlöslich sind, so dass sie bei der fest/flüssig-Separation quantitativ abgetrennt werden.

Ein ganz besonderer Vorteil des Verfahrens besteht deshalb darin, dass für die Elektrolytbereitung keine hochreinen Lösemittel verwendet werden müssen, sondern auch deutlich preiswertere Qualitäten mit höherem Wassergehalt (z.B. 0,1 bis 0,5 %) einsetzbar sind.

Verwendung findet die nach dem erfindungsgemäßen Verfahren hergestellte Lithiumiodidlösung als Elektrolyt in galvanischen Zellen oder als Reagenz in der organischen Synthese, z.B. zur Öffnung von Epoxiden zu β-Halohydrinen, Etherspaltungen oder als Additive für Palladiumkatalysierte Reaktionen.

Der Gegenstand der Erfindung wird anhand der folgenden Beispiele näher erläutert:

**Beispiel 1: Herstellung einer 29 %-igen Lithiumiodidlösung in 1,3-Dioxolan aus Lithiumhydrid und Iod**

Ein 500-ml-Glasreaktor mit Glasdosierbirne, Rückflusskühler und Leitfähigkeitsmesszelle wurde getrocknet und mit Argon inertisiert. In dem Glasreaktor wurden 11,9 g (1,50 mol) LiH-Granulat in 315 g wasserfreiem 1,3-Dioxolan vorgelegt und auf 40 °C erwärmt. Das Lithiumhydrid wurde als staubfreies Granulat mit 1 bis 5 mm großen Partikeln eingesetzt.

Das in Schuppenform vorliegende Iod (134,1 g, 1,06 mol) wurde in 6 Portionen innerhalb von 80 Minuten zudosiert. Sofort nach Zugabe setzte eine stark exotherme Reaktion ein. Die Temperaturdifferenz zwischen Kühlmantel und dem Reaktorinneren betrug bis zu 20 °C. Bei Zugabeende hatten sich 8,8 l $H_2$ (ca. 70 % der Theorie) und eine halbe Stunde nach Zugabeende 12,9 l (102 % der Theorie) Gas entwickelt. Die Lösung war immer noch bräunlich. Um die letzten Iodreste umzusetzen, wurden 0,3 g (40 mmol) LiH-Pulver zudosiert. Daraufhin bildeten sich noch 300 ml Gas und die Lösung entfärbte sich innerhalb von 10 Minuten weitgehend. Erhalten wurde eine hellgelbe Lösung. Die Leitfähigkeit der Lösung nahm von anfangs < 1 μS/cm auf zum Schluss 5 mS/cm zu. Bei den einzelnen Iodzugaben erreichte die Leitfähigkeit jeweils ein relatives Maximum, um dann wieder auf einen niedrigeren Wert abzufallen. Aufgrund der

Inhomogenität der Reaktionsmischung schwankte die Leitfähigkeit stark.

Die klare, sehr schwachgelbe Lösung wurde zur Abtrennung von überschüssigem Lithiumhydrid über eine G3-Fritte filtriert und mit 26 g Dioxolan nachgewaschen.

Analyse (mmol/g):

| Li | I° | $I^-$ |
|---|---|---|
| 2,15 | n.n. | 2,14 |

n.n. = nicht nachweisbar

Wassergehalt: 50 ppm (Karl Fischer-Titration)

Aus diesen Daten errechnet sich eine LiI-Ausbeute von 95 % der Theorie.

**Beispiel 2: Herstellung einer 20%igen LiI-Lösung aus LiH/Iod in 1,2-Dimethoxyethan**

In einem mit Stickstoff inertisierten 0,5 l-Vierhalskolben mit Rückflusskühler, Feststoffdosiervorrichtung und Thermoelement wurden 1,26 g (167 mmol) Lithiumhydridpulver (Partikelgröße < 150 µm) in 80 g (ca. 100 ml) 1,2-Dimethoxyethan vorgelegt. Unter magnetischem Rühren wurden insgesamt 19,1 g (150 mmol) Iod innerhalb von 25 Minuten zugegeben. Unter heftiger Gasentwicklung erwärmte sich das Reaktionsgemisch bis auf max. 52 °C (Wasserbadkühlung). Etwa 30 Minuten nach Dosierende hatte sich die zuvor dunkelbraune Lösung vollständig entfärbt. Es begann ein Feststoff auszufallen, bei dem es sich um einen Lithiumiodid/1,2-Dimethoxyethan-Komplex handelte.

Durch Erwärmen auf 70 °C wurde der Feststoff wieder in Lösung gebracht. Nach Filtration über eine erwärmte Glasfritte wurden 98 g einer Lösung enthalten, die beim Abkühlen kristallisierte. Aus der heißen, homogenen Lösung wurde eine Probe entnommen und auf Lithium und Iod analysiert. Daraus berechnete sich ein Gehalt von 20,1 % LiI, d.h. die in Form der Lösung isolierte LiI-Ausbeute betrug 98 %.

**Beispiel 3: Herstellung einer 8 %-igen LiI-Lösung aus Lithiummetallgranulat/Iod in 1,2-Dimethoxyethan**

In der im Beispiel 2 beschriebenen Apparatur wurden 1,63 g Lithiummetallgranulat (235 mmol, Partikelgröße 2 bis 3 mm) in 225 g Dimethoxyethan vorgelegt und auf 30 °C erwärmt. Unter Rühren wurden 19,0 g (150 mol) Iod innerhalb von 80 Minuten zugegeben. Die Reaktion startete (erkenntlich an der Exothermie) nach ca. 20 Minuten. Durch die frei werdende Reaktionswärme erhitzte sich das Gemisch bis auf maximal 51 °C.

Nach etwa 3 Stunden war die Reaktion (erkenntlich am Temperaturausgleich) im wesentlichen abgeschlossen. Zur Entfärbung des braunen Reaktionsgemisches war jedoch noch ca. 10-stündiges Rühren bei 30 °C notwendig.

Ausbeute: 240 g gelbliche Lösung mit 8,1 % Gehalt an LiI = 97 % der Theorie.

**Patentansprüche**

1. Verfahren zur Herstellung von Lithiumiodidlösungen durch Reaktion eines lithiumhaltigen Stoffes mit elementarem Iod, **dadurch gekennzeichnet, dass** die Herstellung des Lithiumiodids in einem aprotischen Lösungsmittel, welches als Lösungsmittel in einer Flüssigelektrolytlösung eingesetzt werden kann, erfolgt, wobei Lithiummetall oder Lithiumhydrid im aprotischen Lösungsmittel mit elementarem Iod umgesetzt wird, indem das Lithiummetall oder das Lithiumhydrid im Lösungsmittel vorgelegt und das Iod als Feststoff oder als Lösung zudosiert wird.

2. Verfahren nach Anspruch 1, **dadurch gekennzeichnet, dass** das aprotische Lösungsmittel cyclische oder offenkettige di- oder mehr-funktionelle Ether, Carbonate, Carbonsäureester oder Lactone, oder Mischungen davon enthält.

3. Verfahren nach Anspruch 1 oder 2, **dadurch gekennzeichnet, dass** das Lösungsmittel cyclische oder offenkettige di- oder mehr-funktionelle Ether enthält.

4. Verfahren nach einem der Ansprüche 1 bis 3, **dadurch gekennzeichnet, dass** das Lösungsmittel 1,3-Dioxolan, 1,2-Dimethoxyethan, 1,2-Diethoxyethan, Diethylenglykoldimethylether oder Diethylenglykoldiethylether enthält.

5. Verfahren nach Anspruch 1, **dadurch gekennzeichnet, dass** das Lithiummetall oder das Lithiumhydrid als Pulver mit einer Korngröße von 10 bis 500 µm oder als Granulat mit einer Korngröße von 0,5 bis 10 mm eingesetzt wird.

6. Verfahren nach Anspruch 4 oder 5, **dadurch gekennzeichnet, dass** das Lithiummetall oder das Lithiumhydrid im

Überschuss von 1 bis 100 mol-% eingesetzt wird.

7. Verfahren nach einem der Ansprüche 4 bis 6, **dadurch gekennzeichnet, dass** das Lithiummetall oder das Lithiumhydrid im Überschuss von 3 bis 20 mol-% eingesetzt wird.

8. Verfahren nach einem der Ansprüche 1 bis 7, **dadurch gekennzeichnet, dass** die Ansatzkonzentration so gewählt wird, dass eine 5 bis 30 Gew.-%-ige Lösung von Lithiumiodid im aprotischen Lösungmittel erhalten wird.

9. Verfahren nach einem der Ansprüche 1 bis 8, **dadurch gekennzeichnet, dass** die Reaktion bei Temperaturen von -20 bis 100 °C durchgeführt wird.

10. Verfahren nach Anspruch 9, **dadurch gekennzeichnet, dass** die Reaktion bei Temperaturen von 0 bis 60 °C durchgeführt wird.

11. Verfahren nach einem der Ansprüche 1 bis 10, **dadurch gekennzeichnet, dass** die Reaktion unter Lichtausschluss durchgeführt wird.

12. Verfahren nach einem der Ansprüche 1 bis 11, **dadurch gekennzeichnet, dass** die Reaktion unter Inertgas durchgeführt wird.

13. Verfahren nach einem der Ansprüche 1 bis 12, **dadurch gekennzeichnet, dass** ein Überschuss an Lithiummetall oder Lithiumhydrid und andere unlösliche Nebenprodukte von der Lösung abgetrennt werden.

14. Verwendung der nach einem Verfahren der Ansprüche 1 bis 13 hergestellten Lithiumiodidlösung als Elektrolyt in galvanischen Zellen.

15. Verwendung der nach einem Verfahren der Ansprüche 1 bis 13 hergestellten Lithiumiodidlösung als Reagenz in der organischen Synthese.

## Claims

1. Process for the preparation of lithium iodide solutions by reacting a lithium-containing substance with elemental iodine, **characterized in that** the lithium iodide is prepared in an aprotic solvent that can be used as a solvent in a liquid electrolyte solution, wherein lithium metal or lithium hydride is reacted with elemental iodine in the aprotic solvent by placing the lithium metal or the lithium hydride in the solvent and metering the iodine in as a solid or a solution.

2. Process according to claim 1, **characterized in that** the aprotic solvent contains cyclic or open-chain difunctional or polyfunctional ethers, carbonates, carboxylic acid esters or lactones, or mixtures thereof.

3. Process according to claim 1 or 2, **characterized in that** the solvent contains cyclic or open-chain difunctional or polyfunctional ethers.

4. Process according to one of claims 1 to 3, **characterized in that** the solvent contains 1,3-dioxolane, 1,2-dimethoxyethane, 1,2-diethoxyethane, diethylene glycol dimethyl ether or diethylene glycol diethyl ether.

5. Process according to claim 1, **characterized in that** the lithium metal or the lithium hydride is used as a powder with a particle size of 10 to 500 μm or as granules with a particle size of 0.5 to 10 mm.

6. Process according to claim 4 or 5, **characterized in that** the lithium metal or the lithium hydride is used in an excess of 1 to 100 mol%.

7. Process according to one of claims 4 to 6, **characterized in that** the lithium metal or the lithium hydride is used in an excess of 3 to 20 mol%.

8. Process according to one of claims 1 to 7, **characterized in that** the batch concentration is chosen so as to give a 5 to 30 wt.% solution of lithium iodide in the aprotic solvent.

**9.** Process according to one of claims 1 to 8, **characterized in that** the reaction is carried out at temperatures of -20 to 100°C.

**10.** Process according to claim 9, **characterized in that** the reaction is carried out at temperatures of 0 to 60°C.

**11.** Process according to one of claims 1 to 10, **characterized in that** the reaction is carried out to the exclusion of light.

**12.** Process according to one of claims 1 to 11, **characterized in that** the reaction is carried out under inert gas.

**13.** Process according to one of claims 1 to 12, **characterized in that** excess lithium metal or lithium hydride and other insoluble by-products are separated from the solution.

**14.** Use of the lithium iodide solution prepared according to a process of claims 1 to 13 as an electrolyte in galvanic cells.

**15.** Use of the lithium iodide solution prepared according to a process of claims 1 to 13 as a reagent in organic synthesis.

## Revendications

**1.** Procédé de préparation de solutions d'iodure de lithium par réaction d'une matière contenant du lithium avec de l'iode élémentaire, **caractérisé en ce qu'**on réalise la préparation de l'iodure de lithium dans un solvant aprotique qui peut être employé comme solvant dans une solution formant un électrolyte liquide, et dans lequel procédé on fait réagir du lithium métal ou un hydrure de lithium avec de l'iode élémentaire dans le solvant aprotique, en mettant d'abord dans le solvant du lithium métal ou de l'hydrure de lithium et en y ajoutant ensuite de l'iode, à l'état solide ou en solution.

**2.** Procédé conforme à la revendication 1, **caractérisé en ce que** le solvant aprotique contient des composés cycliques ou à chaîne ouverte, difonctionnels ou polyfonctionnels, de type éther, carbonate, carboxylate ou lactone, ou des mélanges de tels composés.

**3.** Procédé conforme à la revendication 1 ou 2, **caractérisé en ce que** le solvant contient des éthers cycliques ou à chaîne ouverte, difonctionnels ou polyfonctionnels

**4.** Procédé conforme à l'une des revendications 1 à 3, **caractérisé en ce que** le solvant contient du 1,3-dioxolane, du 1,2-diméthoxy-éthane, du 1,2-diéthoxy-éthane, de l'éther diméthylique de diéthylèneglycol, ou de l'éther diéthylique de diéthylèneglycol,

**5.** Procédé conforme à la revendication 1, **caractérisé en ce que** l'on utilise le lithium métal ou l'hydrure de lithium sous la forme d'une poudre dont les particules ont une taille de 10 à 500 μm, ou sous la forme d'un granulat dont les grains ont une taille de 0,5 à 10 mm.

**6.** Procédé conforme à la revendication 4 ou 5, **caractérisé en ce que** l'on utilise le lithium métal ou l'hydrure de lithium en un excès de 1 à 100 % en moles.

**7.** Procédé conforme à l'une des revendications 4 à 6, **caractérisé en ce que** l'on utilise le lithium métal ou l'hydrure de lithium en un excès de 3 à 20 % en moles.

**8.** Procédé conforme à l'une des revendications 1 à 7, **caractérisé en ce que** la concentration de l'ajout est choisie de manière à ce que l'on obtienne une solution contenant de 5 à 30 % en poids d'iodure de lithium dans le solvant aprotique.

**9.** Procédé conforme à l'une des revendications 1 à 8, **caractérisé en ce que** l'on effectue la réaction à une température de -20 à 100 °C.

**10.** Procédé conforme à la revendication 9, **caractérisé en ce que** l'on effectue la réaction à une température de 0 à 60 °C.

**11.** Procédé conforme à l'une des revendications 1 à 10, **caractérisé en ce que** l'on effectue la réaction à l'abri de la

lumière.

**12.** Procédé conforme à l'une des revendications 1 à 11, **caractérisé en ce que** l'on effectue la réaction sous atmosphère de gaz inerte.

**13.** Procédé conforme à l'une des revendications 1 à 12, **caractérisé en ce que** l'on sépare de la solution l'excès de lithium métal ou d'hydrure de lithium, ainsi que les autres sous-produits insolubles.

**14.** Utilisation, en tant qu'électrolyte dans des piles galvaniques, d'une solution d'iodure de lithium préparée suivant un procédé conforme à l'une des revendications 1 à 13.

**15.** Utilisation, en tant que réactif en synthèse organique, d'une solution d'iodure de lithium préparée suivant un procédé conforme à l'une des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6218054 B


### In der Beschreibung aufgeführte Nicht-Patentliteratur


- **M.D.Taylor ; L.R. Grant.** *J. Am. Chem. Soc.,* 1955, vol. 77, 1507-1508